# EUROPÄISCHE PATENTSCHRIFT

(11) **EP 3 349 315 B1**
(45) Veröffentlichungstag und Bekanntmachung des Hinweises auf die Patenterteilung: **01.04.2020**
(21) Anmeldenummer: 18151517.2
(22) Anmeldetag: 12.01.2018
(51) Int. Cl.: H02G 1/08, G01B 3/06

(54) **VERLEGEWERKZEUG**
LAYING TOOL
OUTIL DE POSE

(30) Priorität: 12.01.2017 CH 402017
(43) Veröffentlichungstag der Anmeldung: 18.07.2018
(73) Patentinhaber: Kunststoffwerk AG Buchs, 9470 Buchs (CH)
(72) Erfinder: Rudolph, Martin, 9470 Buchs (CH)
(74) Vertreter: Riederer Hasler & Partner Patentanwälte AG

(56) Entgegenhaltungen:
- EP-A1- 0 641 991
- DE-A1- 2 854 740
- DE-U1- 9 400 645
- US-A1- 2005 126 029
- US-A1- 2009 159 862
- US-B1- 8 782 914

## Beschreibung

Die Erfindung betrifft ein Verlegewerkzeug zum Einziehen von Kabeln in schwerzugängliche Hohlräumen, zum Beispiel abgehängte Deckenkonstruktionen, gemäss Oberbegriff des Anspruchs 1.

### Stand der Technik

Zum Einziehen von Kabeln in Rohren werden Zugsaiten aus Kunststoff mit angenieteten Ösen zur Befestigung von Kabeln verwendet. Diese weisen die nötige Flexibilität auf, um verwinkelte Rohre zu durchstossen. Diese Flexibilität erweist sich jedoch beim Verlegen von elektrischen Kabeln in abgehängten Decken als Nachteil, da in solchen Fällen ein im Wesentlichen formstabiles Werkzeug erforderlich ist. Um Kabel im Hohlraum von abgehängten Decken verlegen zu können, verwenden Monteure mehrteilige, zusammensteckbare Polyesterstäbe, die mit verschiedenen Aufsätzen zur Befestigung von Kabeln ausgestattet werden können. Ein Nachteil der erwähnten Polyesterstäbe besteht jedoch darin, dass diese für den Gebrauch jeweils zusammengesteckt oder -geschraubt werden müssen. Ausserdem tragen die Monteure dieses Werkzeug normalerweise nicht auf sich. Wird ein Kabel in einer abgehängten Decke verlegt, muss der Monteur daher in aller Regel zuerst von der Leiter heruntersteigen, das Werkzeug zusammenschrauben und dann wieder auf die Leiter steigen. Nach dem Gebrauch muss er dieses sodann wieder auf dem Boden ablegen, bevor er weiterarbeiten kann.

Das deutsche Gebrauchsmuster DE 94 00 645 U1 offenbart einen Gliedermassstab, an dem am Ende wenigstens eines äusseren Massstabsgliedes eine Einrichtung zum Öffnen von Kronkorkenverschlüssen angeordnet ist. Diese Einrichtung besteht aus einem etwa rechtwinklig abstehenden, verschwenkbaren Ansatzes, der gleichzeitig auch als Anschlag beim Messen verwendet werden kann. Im Weiteren weist der Gliedermassstab zwei Bohrungen auf, von denen die eine zur Ausbildung einer Schwenkachse und die andere zur Führung einer Markierungsspitze gedacht ist. Damit kann der Gliedermassstab auch als Zirkel verwendet werden.

US Patent 8,782,914 zeigt einen Gliedermassstab, bei dem die einzelnen Massstabsglieder in regelmässigen Abständen Durchbrechungen/Löcher aufweisen.

Diese Löcher können so ausgebildet sein, dass diese eine Markierungsspitze aufnehmen können.

DE2854740 offenbart ein Gliedermassstab mit einer seitlichen Ausnehmung für das Öffnen von Kronkorkenverschlüssen. Die Ausnehmung kann im Endbereich eines oder mehrerer Massstabglieder angeordnet sein und weist einen Kronkorken über- und umgreifenden Teil und einen unter den Kronkordenrand greifenden Vorsprung auf. Bevorzugt ist im Bereich der Ausnehmung eine Verstärkung angebracht.

In US2009/0159862 ist ein Einziehband beschrieben, welches von einem Ende bis zum anderen Ende angefangen bei Null in regelmässigen Abständen nummeriert ist. Am führenden Ende des Einziehbandes befindet sich vorzugsweise ein Doppelhaken, an welchem ein Kabel angebracht werden kann. Beim Verlegen eines Kabels wird zuerst das Einziehband in die gewünschte Position gelegt, das Kabel an den Doppelhaken am Einziehband angebracht und anschliessend das Einziehband eingezogen und gleichzeitig das Kabel verlegt.

### Aufgabe der Erfindung

Aufgabe der vorliegenden Erfindung ist es, ein Verlegewerkzeug zur Verfügung zu stellen, das handlich und jederzeit griffbereit ist und zum Verlegen von Kabeln oder einzelnen isolierten Leitungen in abgehängten Decken geeignet ist. Ein weiteres Ziel ist es, ein Verlegewerkzeug vorzuschlagen, das für verschiedene Funktionen resp. Arbeiten eingesetzt werden kann.

### Beschreibung

Erfindungsgemäss wird die Aufgabe bei einem verlängerbaren Verlegewerkzeug gemäss Oberbegriff von Anspruch 1 dadurch gelöst, dass der verlängerbare Stab ein aus einer Mehrzahl von Gliedern bestehender Gliedermassstab ist und das Befestigungsmittel als eine in einer Richtung sich verengende Öffnung zum Klemmen eines Kabels ist. Die Öffnung ist dabei an einem oder beiden Endgliedern des Gliedermassstabs vorgesehen. Die erfindungsgemässe Ausführungsform hat den Vorteil, dass ein sich auf einer Leiter befindender Arbeiter, der beispielsweise Kabel in eine abgehängte Decke einziehen möchte, nicht von der Leiter steigen muss, da er das erfindungsgemässe Verlegewerkzeug in Gestalt eines Gliedermassstabs normalerweise auf sich trägt. Der Gliedermassstab lässt sich rasch auf die erforderliche Länge aufklappen, die zum Verlegen des Kabels erforderlich ist. Grundsätzlich denkbar ist, dass die Öffnung zum Festklemmen des Kabels in einem separaten Aufsteckteil ausgebildet ist, das auf ein Endglied des Gliedermassstabs aufsteckbar ist.

Vorteilhaft ist an beiden Endgliedern jeweils eine Öffnung zum Einklemmen eines Kabels vorgesehen. Dies hat den Vorteil, dass beide Endglieder des Verlegewerkzeugs mit der zusätzlichen Funktionalität aussgestattet sind.

Grundsätzlich denkbar ist, dass ein Aufsteckteil auf den Stab aufsteckbar ist, d.h. mit dem Gliedermassstab lösbar verbunden oder verbindbar ist. Diese Ausführung ermöglicht es grundsätzlich, verschiedene Aufsteckteile oder Aufsätze zum Festklemmen eines Kabels zu verwenden.

Gemäss einer besonders vorteilhaften Ausführungsform ist die Öffnung zum Klemmen eines Kabels integral mit dem Endglied. Dies hat den Vorteil, dass keine separaten Teile mitgeführt werden müssen, die unter Umständen auch verloren gehen können.

Eine Öffnung lässt sich herstellungsmässig mit einer zweiteiligen Spritzgussform kostengünstig herstellen.

Zweckmässigerweise befindet sich die Öffnung in kurzem Abstand zum stirnseitigen Rand des Endglieds, d.h. in einem Abstand von maximal 4, 10 oder 20 mm, wobei die Öffnung grundsätzlich auch noch weiter entfernt vom stirnseitigen Rand sein könnte, ohne dass die Funktionalität des Verlegewerkzeugs leiden würde.

Vorteilhaft hat die Öffnung eine Keilform, wobei die Keilspitze zweckmässigerweise im Wesentlichen in der Längsmittellinie des Stabs liegt. Mit einer Keilform können Elektrokabel mit unterschiedlichen Durchmessern eingeklemmt werden.

Gemäss einer bevorzugten Ausführungsform hat die Öffnung eine Doppelkeilform. Eine Doppelkeilform hat den Vorteil, dass der Gliedermassstab sowohl zum Ziehen als auch zum Stossen eines Elektrokabels verwendet werden kann.

Vorteilhaft sind die Seitenwände der Öffnung relativ zu den Flachseiten des Endglieds schräg, d.h. vorzugsweise als eine im Schnitt keilförmig zulaufende Kante, ausgebildet. Dies hat den Vorteil, dass die keilförmige Kante sich in die Kunststoffummantelung des festzuklemmenden Kabels oder der einzelnen Leitung graben kann, sodass dieses sicher gehalten ist.

Ein Ausführungsbeispiel der Erfindung wird nun unter Bezugnahme auf die nachfolgenden Figuren näher im Detail beschrieben. Es zeigt:
- Figur 1:: Perspektivisch ein Endglied eines erfindungsgemässen Verlegewerkzeugs in Gestalt eines Gliedermassstabs mit einem als doppelkeilförmige Öffnung ausgebildeten Befestigungsmittel;
- Figur 2:: Perspektivisch das Endglied von Fig. 1 aus einem anderen Blickwinkel;
- Figur 3 a - c:: Die Verfahrensschritte beim Verlegen eines elektrischen Kabels in einer abgehängten Decke.

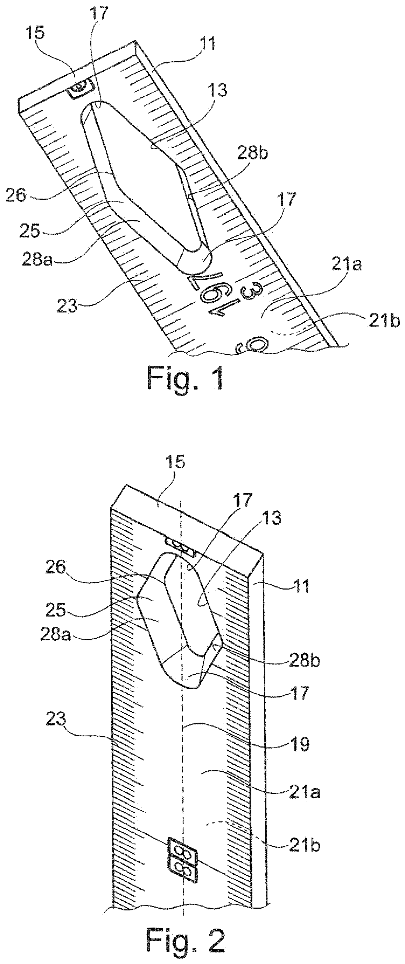

Die Figuren 1 und 2 zeigen ein Endglied 11 eines nicht näher dargestellten Gliedermassstabs. Das Endglied 11 hat eine Öffnung 13 in der Gestalt eines Doppelkeils und befindet sich in kurzem Abstand zum stirnseitigen Rand 15 des Endglieds 11. Wie aus den Figuren ersichtlich ist, liegen die Keilspitzen 17 in der Längsmittelline 19 des Endglieds 11. Die Keilspitzen 17 können dabei etwas abgerundet sein. Dies spielt keine Rolle, solange der Durchmesser der zu fassenden Leitungen oder Kabel grösser als der doppelte Radius der abgerundeten Keilspitze 17 ist.

Das Endglied 11 hat wie alle übrigen Glieder des Gliedermassstabs zwei Flachseiten 21a und 21b, die jeweils mit einer Massskala 23 versehen sind. Die Massskalen können dabei identisch oder unterschiedlich ausgebildet sein, z.B. mit einem metrischen und einem Zollmass. Die Öffnung 13 hat zwischen den beiden Flachseiten 21a, 21b erstreckende Seitenwände 25, die mit der einen Flachseite 21a einen stumpfen Winkel und mit der anderen Flachseite 21b einen spitzen Winkel einschliessen. Auf derjenigen Seite, wo die Seitenwände 25 mit der Flachseite 21b einen spitzen Winkel einschliessen, ist eine scharfe Kante 26 gebildet, die sich in den Mantel eines Elektrokabels 29 oder eines isolierten Drahtes eingraben kann. Die Elektrokabel können damit zwischen den Flanken 28a, 28b der keilförmigen Öffnungen 13 eingeklemmt werden.

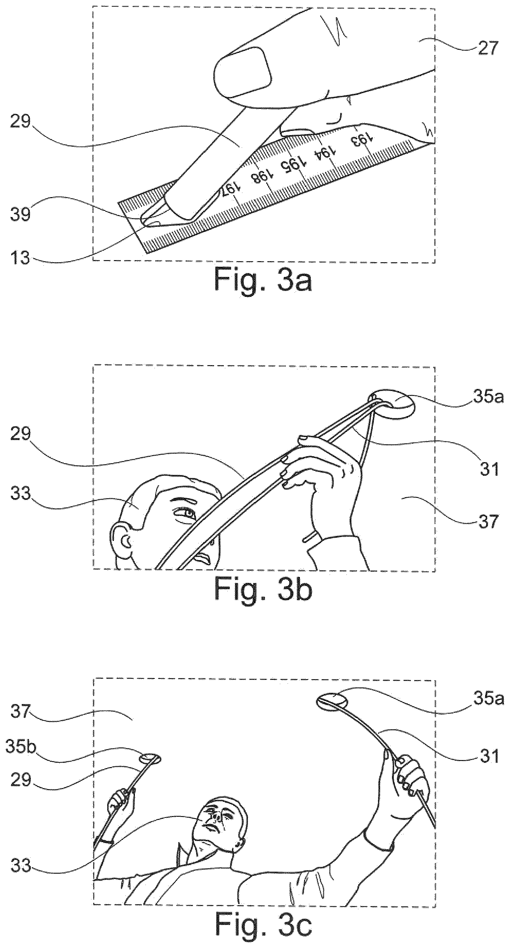

In Figur 3a ist gezeigt, wie ein Monteur mit einer Hand 27 ein elektrisches Kabel 29 in die Öffnung 13 einführt und dann durch Zurückziehen festklemmt. Mit Hilfe des aufgeklappten Gliedermassstabs 31 führt der Monteur 33 das Kabel 29 dann durch ein Loch 35a in der Decke 37 (Figur 3b) in Richtung eines vom ersten Loch 35a beabstandeten zweiten Lochs 35b. Weil der Gliedermassstab 31 sich bogenförmig durchbiegt, u.a. auch wegen des Gewichts des Kabels 29, kann das Kabelende 39 beim Loch 35b wieder gefasst und aus diesem herausgezogen werden (Figur 3c).

Aufgrund der Doppelkeilform der Öffnung 13 kann das Kabel 29 an beiden Keilspitzen 17 eingeklemmt werden, d.h. dass der Gliedermassstab 31 zum Ziehen oder Stossen verwendet werden kann.

Das erfindungsgemässe Verlegewerkzeug in Gestalt eines Gliedermassstabs findet insbesondere Verwendung als sogenannter Elektriker-Gliedermassstab.

Die Erfindung betrifft ein Verlegewerkzeug zum Einziehen von Elektrokabeln oder isolierten, elektrischen Leitungen, insbesondere in schwerzugängliche Hohlräume, wie zum Beispiel in Hohlräume von abgehängten Deckenkonstruktionen, in Gestalt eines Gliedermassstabs. An wenigstends einem Endglied des Gliedermassstabs ist eine in einer Richtung sich verengende Öffnung zum Klemmen eines Kabels vorgesehen.

### Legende

- 11: Endglied
- 13: Öffnung
- 15: Stirnseitiger Rand
- 15: Seitenwände der Öffnung
- 17: Keilspitze
- 19: Längsmittelline
- 21a, 21b: Flachseiten des Endglieds 11
- 23: Massskala
- 25: Seitenwände der Öffnung
- 26: Kante
- 27: Hand eines Monteurs
- 28a, 28b: Flanken
- 29: Elektrisches Kabel
- 31: Gliedermassstab
- 33: Monteur
- 35a, 35b: Löcher in der Decke für Deckenlampen
- 37: Decke
- 39: Kabelende

## Patentansprüche

1. Verlegewerkzeug zum Einlegen von Kabeln, insbesondere in schwerzugängliche Hohlräume, zum Beispiel abgehängte Deckenkonstruktionen, umfassend
- einen verlängerbaren Stab (31) mit
- einem Befestigungsmittel in Gestalt einer Öffnung (13) an einem Ende zur lösbaren Befestigung eines Kabels oder einer einzelnen isolierten Leitung,
**dadurch gekennzeichnet, dass** der verlängerbare Stab (31) ein aus einer Mehrzahl von Gliedern bestehender Gliedermassstab (31) und die Öffnung (13) als eine in einer Richtung sich verengende Öffnung zum Klemmen eines Kabels ist, die an einem Endglied (11) des Gliedermassstabs (31) vorgesehen ist.

2. Verlegewerkzeug nach Anspruch 1, **dadurch gekennzeichnet, dass** an beiden Endgliedern (11) jeweils eine Öffnung zum Klemmen eines Kabels vorgesehen ist.

3. Verlegewerkzeug nach Anspruch 1 oder 2, **dadurch gekennzeichnet, dass** Öffnung zum Klemmen eines Kabels an einem Aufsteckteil ausgebildet ist, das auf ein Endglied des Gliedermassstabs aufsteckbar ist.

4. Verlegewerkzeug nach einem der Ansprüche 1 bis 3, **dadurch gekennzeichnet, dass** die Öffnung zum Klemmen eines Kabels integral mit dem Endglied (11) ist.

5. Verlegewerkzeug nach einem der Ansprüche 1 bis 4, **dadurch gekennzeichnet, dass** die Öffnung (13) zum Klemmen eines Kabels sich in Längsrichtung des Endglieds verengt.

6. Verlegewerkzeug nach Anspruch 5, **dadurch gekennzeichnet, dass** sich die Öffnung (13) in kurzem Abstand zum stirnseitigen Rand (15) des Endglieds (11) befindet.

7. Verlegewerkzeug nach Anspruch 5 oder 6, **dadurch gekennzeichnet, dass** die Öffnung (13) eine Keilform hat, wobei die Keilspitze (17) in der Längsmittellinie (19) des Endglieds (11) liegt.

8. Verlegewerkzeug nach einem der Ansprüche 5 bis 7, **dadurch gekennzeichnet, dass** die Öffnung (13) eine Doppelkeilform aufweist.

9. Verlegewerkzeug nach einem der Ansprüche 5 bis 8, **dadurch gekennzeichnet, dass** die Seitenwände (15) der Öffnung (13) relativ zu den Flachseiten (21a, 21b) des Endglieds (11) schräg ausgebildet sind.

10. Verwendung des Verlegewerkzeugs nach einem der Ansprüche 1 bis 9 als Elektrikermeter und Verlegewerkzeug.

## Claims

1. Laying tool for laying cables, in particular in cavities that are difficult to access, for example in suspended ceiling constructions, comprising
- an extendable bar (31) with
- a fixing means configured as an opening (13) at one end for the detachable fastening of a cable or of a single insulated lead,
**characterized in that** the extendable bar (31) is a folding meter (31) consisting of a multitude of folding members and the opening (13) is an opening, that tapers off in one direction for clamping a cable, that is provided on an end folding member (11) of the folding meter (31).

2. Laying tool according to claim 1, **characterized in that** an opening for clamping a cable is provided at each of the two end folding members (11).

3. Laying tool according to claim 1 or 2, **characterized in that** the opening for clamping a cable is formed on a plug-on part that can be plugged onto an end folding member of the folding meter.

4. Laying tool according to one of the claims 1 to 3, **characterized in that** the opening for clamping a cable is formed integrally with the end folding member (11).

5. Laying tool according to one of the claims 1 to 4, **characterized in that** the opening (13) for clamping a cable tapers off in the longitudinal direction of the end folding member.

6. Laying tool according to claim 5, **characterized in that** the opening (13) is situated at a short distance from the front-end edge (15) of the end folding member (11).

7. Laying tool according to claim 5 or 6, **characterized in that** the opening (13) has a wedge shape, the wedge tip (17) being situated in the longitudinal central line (19) of the end folding member (11).

8. Laying tool according to one of the claims 5 to 7, **characterized in that** the opening (13) has a double wedge shape.

9. Laying tool according to one of the claims 5 to 8, **characterized in that** the sidewalls (15) of the opening (13) are formed inclined with respect to the flat sides (21a, 21b) of the end folding member (11).

10. Use of the laying tool according to one of the claims 1 to 9 as a measuring band for electricians and as a laying tool.

## Revendications

1. Outil de pose pour poser des câbles, en particulier dans des cavités difficilement accessibles, par exemple pour des constructions de plafonds suspendus, comprenant :
- une barre extensible (31) avec
- un moyen de fixation sous forme d'une ouverture (13) à une extrémité pour la fixation amovible d'un câble ou d'une seule conduite isolée,
**caractérisé en ce que** la barre extensible (31) est un mètre pliant (31) constitué par une multitude de segments et l'ouverture (13) est une ouverture, qui se rétrécit dans une direction pour serrer un câble, qui est prévue à un segment d'extrémité (11) du mètre pliant (31).

2. Outil de pose selon la revendication 1, **caractérisé en ce qu'**une ouverture pour serrer un câble est prévue sur chacun des deux segments d'extrémité (11).

3. Outil de pose selon la revendication 1 ou 2, **caractérisé en ce qu'**une ouverture pour serrer un câble est configurée sur une partie emboîtable qui peut être emboîtée sur un segment d'extrémité du mètre pliant.

4. Outil de pose selon l'une des revendications 1 à 3, **caractérisé en ce que** l'ouverture pour serrer un câble est en une pièce avec le segment d'extrémité (11).

5. Outil de pose selon l'une des revendications 1 à 4, **caractérisé en ce que** l'ouverture (13) pour serrer un câble se rétrécit dans le sens longitudinal du segment d'extrémité.

6. Outil de pose selon la revendication 5, **caractérisé en ce que** l'ouverture (13) se trouve à une courte distance du bord frontal (15) du segment d'extrémité (11).

7. Outil de pose selon la revendication 5 ou 6, **caractérisé en ce que** l'ouverture (13) a une forme en coin, la pointe du coin (17) se situant dans la ligne médiane longitudinale (19) du segment d'extrémité (11).

8. Outil de pose selon l'une des revendications 5 à 7, **caractérisé en ce que** l'ouverture (13) présente une forme de double coin.

9. Outil de pose selon l'une des revendications 5 à 8, **caractérisé en ce que** les parois latérales (15) de l'ouverture (13) sont configurées en biais par rapport aux côtés plats (21a, 21b) du segment d'extrémité (11).

10. Utilisation de l'outil de pose selon l'une des revendications 1 à 9 comme mètre pour électricien et outil de pose.
